# EUROPÄISCHE PATENTSCHRIFT

(11) **EP 2 428 793 B1**
(45) Veröffentlichungstag und Bekanntmachung des Hinweises auf die Patenterteilung: **03.08.2016**
(21) Anmeldenummer: 10009347.5
(22) Anmeldetag: 08.09.2010
(51) Int. Cl.: G01N 21/53

(54) **Vorrichtung zur Gasspülung einer optischen Grenzfläche und optische Analysevorrichtung**
Device for gas purging of an optical boundary area and optical analysis device
Dispositif de rinçage de gaz d'une surface limite optique et dispositif d'analyse optique

(43) Veröffentlichungstag der Anmeldung: 14.03.2012
(73) Patentinhaber: SICK AG, 79183 Waldkirch (DE)
(72) Erfinder: Schiffler, Ingo, 79115 Freiburg (DE); Meier, Karl-Andreas, 79232 March-Hugstetten (DE)
(74) Vertreter: Manitz, Finsterwald & Partner GbR

(56) Entgegenhaltungen:
- EP-A2- 0 318 752
- DE-A1- 3 918 363
- DE-A1-102004 018 534
- US-A- 4 240 691
- US-A- 4 443 072
- US-A- 5 146 244

## Beschreibung

Die Erfindung betrifft eine Vorrichtung zur Gasspülung einer optischen Grenzfläche mit einer zumindest teilweise rohrförmigen Spülgaszuführungseinheit, die in ihrer Mantelfläche mehrere Bohrungen zur Gaszuleitung in den Rohrinnenraum aufweist und an deren Stirnseite die zu spülende optische Grenzfläche angeordnet ist oder anzuordnen ist. Die Erfindung betrifft weiterhin eine optische Analysevorrichtung mit einer solchen Vorrichtung zur Gasspülung einer optischen Grenzfläche.

Es existieren optische Analysegeräte, die zur optischen Beobachtung bzw. Analyse von Medien in einem Messvolumen dienen. Bei dem Messvolumen kann es sich zum Beispiel um einen Behälter handeln, in dem ein Gas oder ein Fluid vorgesehen ist, das zu untersuchen ist. Andere Anwendungen sehen zum Beispiel die Untersuchung von Gas oder dreckiger Luft zum Beispiel in einem Abgaskamin vor. Dazu wird ein optisches Analysegerät an eine Öffnung in der Wandung des Kamins befestigt.

Das optische Analysegerät kann zum Beispiel einen Lichtsender und einen Lichtempfänger umfassen, mit deren Hilfe die Absorption oder Reflexion eines Lichtstrahles in dem Messvolumen gemessen werden kann. Die Absorption oder Reflexion hängt dabei zum Beispiel von der Partikelkonzentration in dem zu untersuchenden Medium ab. Eine solche Vorrichtung, die als Partikelkonzentrationsmessvorrichtung ausgestaltet ist, ist zum Beispiel der DE 10 2005 025 181 A1 zu entnehmen.

Außerdem kann - bei entsprechender Ausrüstung des optischen Analysegerätes - auch eine weitergehende Analyse des Mediums erfolgen, zum Beispiel eine spektroskopische Untersuchung.

Das optische Analysegerät ist in der Regel durch eine optische Grenzfläche, zum Beispiel eine Glasscheibe, abgeschlossen, die die optischen Elemente des optischen Analysegerätes während des Betriebes von dem zu analysierenden Medium trennt. Damit eine solche optische Grenzfläche, die zum Beispiel bei einer Anwendung in einem Abgaskamin der dreckigen Luft oder dem Gas ausgesetzt ist, nicht verschmutzt, werden saubere Luft oder Gas eingesetzt, die in den Raum vor der Grenzfläche geleitet wird. Die Verwendung eines solchen Spülgases und die Betriebskosten zum Beispiel von Pumpen erhöhen die Betriebskosten des optischen Analysegerätes, sodass möglichst wenig Spülgas zum Einsatz kommen sollte. Außerdem kann ein solches Spülgas die Kosten weiter erhöhen, wenn auf ein Gas zurückgegriffen werden muss, das die tatsächliche Messung nicht beeinflusst. So kann zum Beispiel bei einer Sauerstoffmessung in der Regel keine Luft eingesetzt werden, da diese den Sauerstoffmesswert verfälschen würde. In einem solchen Fall muss als Spülgas daher das teurere Stickstoff oder Wasserdampf verwendet werden.

Bei bekannten Lösungen werden zum Beispiel ringförmig vor der optischen Grenzfläche Bohrungen angebracht, durch die Spülgas einströmen kann.

DE 1993225 U beschreibt einen Spülluftvorsatz zum Schutz optischer Flächen, bei der durch eine spezielle Anordnung ineinandergesetzter Rohre einen Ringspalt vor der optischen Grenzfläche erzeugt wird, durch den Spülgas eingeführt werden kann.

DE 10 2004 018 534 B4 beschreibt ein optisches System mit Spülgaszufuhr zu einem Beobachtungsraum, der vor dem optischen Fenster angeordnet ist. Die Spülgaszufuhr geschieht durch eine poröse Wandung um eine diffuse Einströmung an der optischen Grenzfläche zu erreichen.

US 4,443,072 beschreibt die Fensterreinigung mit Spülgas, das derart schräg in das Volumen vor einem Fenster eingebracht wird, dass ein Drall entsteht.

US 4,240,691 beschreibt das Spülen eines optischen Elements mit der Zuführung von Spülgas durch einen Ringspalt vor dem optischen Element.

Eine Vorrichtung mit den Merkmalen des Oberbegriffs des Anspruchs 1 ist aus EP 0 318 752 A2 bekannt.

Es ist die Aufgabe der vorliegenden Erfindung, eine Vorrichtung zur Gasspülung einer optischen Grenzfläche anzugeben, die eine homogene, nahezu wirbelfreie Einströmung ermöglicht und flexibel eingesetzt werden kann.

Diese Aufgabe wird mit einer Vorrichtung zur Gasspülung einer optischen Grenzfläche mit den Merkmalen des Anspruchs 1 gelöst. Bevorzugte Ausgestaltungen sind Gegenstand von Unteransprüchen. Anspruch 11 ist auf eine optische Analysevorrichtung gerichtet, die eine erfindungsgemäße Vorrichtung zur Gasspülung einer optischen Grenzfläche aufweist.

Bei einer erfindungsgemäßen Vorrichtung zur Gasspülung einer optischen Grenzfläche sind die in der Mantelfläche der rohrförmigen Spülgaszuführeinheit vorgesehenen Bohrungen derart ausgerichtet, dass sie den jeweiligen Gasstrom von der zu spülenden optischen Grenzfläche wegleiten. Bei einer solchen Anordnung strömt das Spülgas von der optischen Grenzfläche weg in Richtung des Messvolumens, zum Beispiel des Abgaskanals. Vorteilhafterweise sind die Bohrungen über den Umfang der Mantelfläche der rohrförmigen Spülgaszuführung in der Anordnung eines Ringes gleich verteilt. Die Bohrungen wirken wie Punktdüsen. Durch die Strömung des Spülgases von der optischen Grenzfläche weg wird wirksam verhindert, dass das möglicherweise schmutzige Gas (zum Beispiel das Abgas in dem Abgaskanal) an die optische Grenzfläche gelangen kann. Verschmutzungen oder Verunreinigungen im Bereich der optischen Grenzfläche werden wirksam durch den von der optischen Grenzfläche weg gerichteten Gasstrom mitgerissen und so entfernt.

Der Begriff der Spülgaszuführungseinheit wird hier verwendet um ein Element zu bezeichnen, das zur Zuführung von Spülgas zur Gasspülung einer optischen Grenzfläche dient.

Bei Anordnungen des Standes der Technik, bei denen das Spülgas nicht von der optischen Grenzfläche weggeleitet wird, insbesondere wenn es radial in die rohrförmige Gaszuführungseinheit eingeleitet wird, werden durch das einströmende Spülgas Wirbel gebildet, da es nicht homogen abgeführt werden kann. Bei der erfindungsgemäßen Lösung findet durch die Strömungsrichtung von der optischen Grenzfläche weg eine sehr viel homogenere Strömung statt, sodass eine homogene, nahezu wirbelfreie Einströmung gewährleistet ist. Auf diese Weise lässt sich die Spülgasmenge reduzieren und die Vorrichtung kann auch bei schräg gestellten optischen Grenzflächen eingesetzt werden, wie sie zum Beispiel bei Lasermessgeräten notwendig sind.

Bei einer vorteilhaften Weiterbildung der Erfindung sind die einzelnen Bohrungen derart ausgestaltet, dass durch sie jeweils im Wesentlichen der gleiche Gasstrom fließt. Dies dient zusätzlich der Homogenisierung des Gasstromes von der optischen Grenzfläche weg.

Eine mögliche Realisierung dieser bevorzugten Ausführungsform sieht vor, dass der Durchmesser der einzelnen Bohrungen derart unterschiedlich gewählt ist, dass unabhängig von der Geometrie und/oder Länge der Gasflussstrecke zwischen einer Gaszufuhr und der jeweiligen Bohrung durch alle Bohrungen ein Gasstrom von im Wesentlichen der gleichen Größe fließt. Eine solche Realisierung ist zum Beispiel denkbar, wenn ein Gasstrom von einer Gaszufuhr (zum Beispiel von einer Gasflasche) durch einen einzelnen Gaskanal zu der Vorrichtung zur Gasspülung geführt wird, an einer Stelle in diese einströmt und dann auf verschiedene Bohrungen verteilt wird. Hier entstehen unterschiedliche Drücke und Strömungszustände, die zu unterschiedlichen Gasströmen durch die einzelnen Bohrungen führen. Werden die Bohrungen in ihrer Größe allerdings gemäß der beschriebenen möglichen Realisierung der Ausführungsform entsprechend angepasst, kann dieser Effekt ausgeglichen werden. Eine solche Anordnung mit unterschiedlichen Bohrungsdurchmessern ist besonders kostengünstig.

Andererseits kann zur Erzeugung eines im Wesentlichen gleichen Gasstroms in den einzelnen Bohrungen jede der Bohrungen mit einer eigenen Gaszufuhr verbunden werden, also zum Beispiel mit einer eigenen Gasflaschenversorgung oder einem eigenen Gaszufuhrschlauch von einer Gasflasche aus.

Eine besonders bevorzugte Ausführungsform sieht vor, dass eine Gaseinströmungseinrichtung vorgesehen ist, deren eines Ende mit einer Gaszufuhr, zum Beispiel einer Gasflasche, verbunden werden kann und die ausgehend von diesem Ende baumartig in mehrere Kanäle verzweigt, die mit den Bohrungen verbunden sind. Durch die baumartige Verzweigung ist gewährleistet, dass an den jeweiligen Enden der baumartigen Verzweigung in der Regel ein vergleichbarer Gasstrom anliegt.

Besonders einfach lässt sich eine solche Ausführungsform realisieren, wenn die Verzweigungen des Kanals jeweils einen Ringkanal umfassen, der derart mit einem zuführenden Kanal in Verbindung steht, dass ein durch den zuführenden Kanal einströmender Gasstrom senkrecht auf eine Wand des Ringkanals auftrifft und darin nach zwei Seiten im Wesentlichen geometrisch identisch abgeleitet wird. Auf diese Weise lässt sich die baumartige Geometrie sehr leicht realisieren und es ist eine optimale Gleichaufteilung zwischen den von der Verzweigung abführenden Kanälen gewährleistet.

Die Bohrungen können so ausgerichtet sein, dass sie den Gasstrom von der optischen Grenzfläche weg, aber gerade einleiten. Eine andere Ausführungsform sieht vor, dass die Bohrungen derart schräg ausgerichtet sind, dass sie dem einströmenden Gas einen Drall in Umfangsrichtung der rohrförmigen Gaszuführungseinheit geben.

Bei der erfindungsgemäßen Vorrichtung ist zumindest ein benachbart zu der Stirnseite der rohrförmigen Spülgaszuführungseinheit, die der optischen Grenzfläche zugewandt ist, und zwischen der Stirnseite und den Bohrungen angeordneter Ringspalt in der Mantelfläche der rohrförmigen Spülgaszuführungseinheit vorgesehen, durch den zusätzlich Spülgas eingeführt werden kann. Ein solcher Ringspalt wirkt wie eine Schlitzdüse, die von dem Spalt ausgehend einen Gasvorhang bildet, der über die optische Grenzfläche zur Mitte des Rohrinnenraumes strömt. So ein Gasvorhang wird vom Sog der Gasströme, der durch die erfindungsgemäß angeordneten Bohrungen in der Mantelfläche des Rohrinnenraumes einströmen, wegtransportiert. Der von dem Ringspalt einströmende Gasstrom und der durch ihn gebildete Vorhang dienen der zusätzlichen effektiven Entfernung von Verunreinigungen und Verhinderung der Verschmutzung der optischen Grenzfläche. Durch den Sog der von der optischen Grenzfläche weggerichteten Bohrungen ist trotzdem gewährleistet, dass keine unerwünschte Wirbelbildung auftritt. Andererseits kann mit Hilfe des durch den Ringspalt einströmenden Gasstromes der Unterdruck ausgeglichen werden, der durch die von der optischen Grenzfläche weggerichteten Bohrungen an der optischen Grenzfläche entstehen könnte.

Eine einfache Ausgestaltung der Vorrichtung zur Gasspülung einer optischen Grenzfläche umfasst einen rohrförmigen Flansch, der auf einfache Weise mit der Wandung des Messvolumens verbunden werden kann, indem sich das zu analysierende bzw. zu beobachtende Medium befindet oder bewegt.

In diesem Flansch können die Elemente zur Gaszuführung vorgesehen sein.

Eine bevorzugte Realisierung sieht vor, dass in dem Flansch ein Spülring vorgesehen ist, der die Elemente zur Gaszufuhr und die Bohrungen, insbesondere die Bohrungen zum Rohrinnenraum hin, umfasst. Ein solcher Spülring ist leicht in einen Flansch einzusetzen und erhöht die Flexibilität des Systems signifikant. Je nach Anwendung kann auf diese Weise die Spülgasgeometrie gewechselt werden, zum Beispiel mit unterschiedlichen Kanaldurchmessern ausgestattet werden, etc.

Besonders einfach ist es, wenn der Spülring an seinem Außenumfang ringförmige Nuten umfasst, die beim Einschieben des Spülringes in den Flansch durch die Innenfläche des Flansches zu Ringkanälen abgeschlossen werden. Die einzelnen Nuten können durch vorzugsweise axial ausgerichtete Ausnehmungen miteinander verbunden sein, um die oben beschriebene bevorzugte Ausführungsform mit Ringkanälen zu bilden, die jeweils mit einem zuführenden Kanal in Verbindung stehen.

Die Erfindung betrifft weiterhin eine optische Analysevorrichtung mit einem von einer Wandung umgebenen Messvolumen zur Beobachtung eines darin befindlichen zu analysierenden Mediums. Es kann sich dabei zum Beispiel um einen Abgaskanal handeln, in dem Abgas strömt. Die erfindungsgemäße optische Analysevorrichtung weist eine erfindungsgemäße Vorrichtung zur Gasspülung einer optischen Grenzfläche auf. Die Gaszuführungseinheit dieser erfindungsgemäßen Vorrichtung zur Gasspülung ist durch eine Öffnung in der Wandung mit dem Messvolumen verbunden oder kann mit dieser verbunden werden. Die optische Analysevorrichtung weist außerdem eine Messeinheit auf, die mit der Spülgaszuführungseinheit verbunden oder mit dieser verbindbar ist und eine Messeinrichtung zur optischen Analyse des Mediums in dem Messvolumen durch die Spülgaszuführungseinheit hindurch aufweist. Die Messeinrichtung ist von der Spülgaszuführungseinheit durch ein Sichtfenster getrennt, das eine optische Grenzfläche aufweist.

Alternativ kann die erfindungsgemäße optische Analysevorrichtung anstelle des Messvolumens auch eine Einrichtung umfassen, mit der sie an ein entsprechendes Messvolumen angeschlossen werden kann.

Die Vorteile einer erfindungsgemäß ausgestalteten optischen Analysevorrichtung ergeben sich aus den oben geschilderten Vorteilen der erfindungsgemäßen Vorrichtung zur Gasspülung einer optischen Grenzfläche. Besondere Ausführungsformen der erfindungsgemäßen optischen Analysevorrichtung ergeben sich in analoger Weise aus der obigen Schilderung der besonderen Ausführungsformen der optischen Vorrichtung zur Gasspülung einer optischen Grenzfläche und deren Vorteilen.

Die Erfindung wird im Folgenden anhand der beiliegenden Figuren im Detail erläutert, die eine Ausführungsform einer erfindungsgemäßen Vorrichtung zur Gasspülung einer optischen Grenzfläche zeigen.
- Fig. 1a: zeigt einen seitlichen Querschnitt durch eine Ausführungsform einer Vorrichtung zur Gasspülung einer optischen Grenzfläche,
- Fig. 1b: zeigt einen Teil einer optischen Messeinheit, zur Verbindung mit einer Vorrichtung zur Gasspülung gemäß Fig. 1 a,
- Fig. 2: zeigt eine schräge Draufsicht auf den Spülring einer Vorrichtung der Fig. 1a, und
- Fig. 3: zeigt einen seitlichen Schnitt durch den Spülring der Fig. 2.

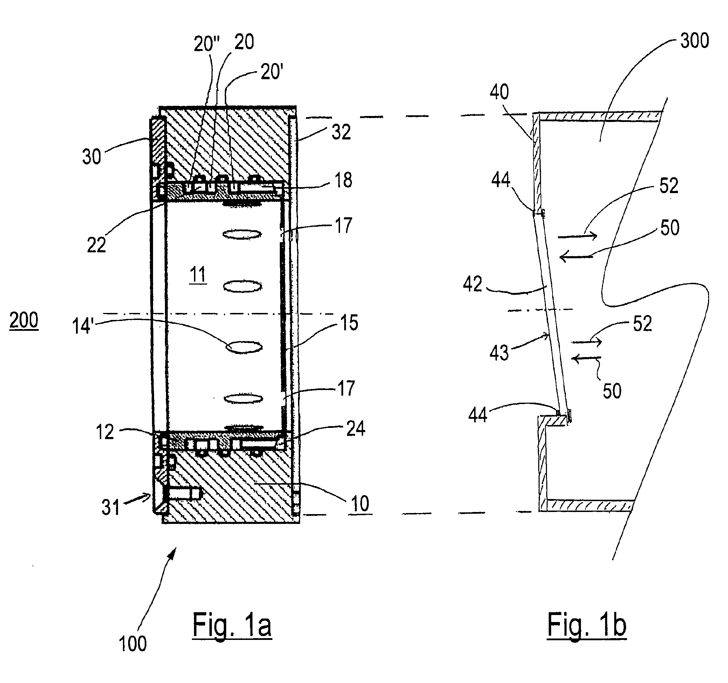

Fig. 1a zeigt eine Spülgaszuführungseinheit 100 (im Folgenden auch als Spüleinheit 100 bezeichnet) zur Spülung einer optischen Grenzfläche. Die Spüleinheit 100 weist einen im Wesentlichen rohrförmigen Flansch 10 auf, in den ein Spülring 12 eingeschoben ist. Der Spülring 12 wird in dem Flansch 10 mit einer Abdeckung 30 gehalten, der zum Beispiel in den Flansch 10 durch Schraublöcher 31 hindurch festgeschraubt sein kann.

Direkt oder an der Abdeckung 30 kann die Anordnung an ein Messvolumen 200 in hier nicht gesondert dargestellter Weise befestigt werden. Bei dem Messvolumen kann es sich zum Beispiel um einen Schornstein handeln, in dem die Partikelkonzentration bzw. die Rauchkonzentration festgestellt werden soll.

Zur Beobachtung oder Analyse kann auf der in Fig. 1a rechten Seite der Spüleinheit 100 eine Messeinheit vorgesehen sein, die eine optische Messung durch das Rohrinnenvolumen 11 hindurch ermöglicht. Fig. 1b zeigt einen Teil einer solchen optischen Messeinheit 300, die in der Ausnehmung 32 der Spüleinheit 100 in hier nicht interessierender Weise abdichtend befestigt sein kann. Gezeigt ist dabei nur die Anschlussseite zum Anschluss an den rohrförmigen Flansch 10. Auf der rechten Seite der Fig. 1b kann zum Beispiel in an sich bekannter Weise eine optische Einheit vorgesehen sein, die eine Sendeeinheit, die einen Lichtstrahl durch den Rohrinnenraum 11 in das Messvolumen 200 schickt, und eine Empfangseinheit, die von Partikeln in dem Messvolumen 200 zurückgestreutes Licht nachweisen kann, umfasst. Von der nicht gezeigten Sendeeinheit ausgesendetes Sendelicht ist schematisch mit dem Pfeil 50 dargestellt, während von dem Messvolumen 200 zurückgestreutes Licht schematisch mit dem Pfeil 52 angedeutet ist. Mit einer solchen Messeinheit lässt sich zum Beispiel die Konzentration von Partikeln in dem Messvolumen 200 bestimmen. Die Anwendung der erfindungsgemäßen optischen Vorrichtung zur Gasspülung einer optischen Grenzfläche ist jedoch nicht auf eine solche Anwendung beschränkt.

In dem Gehäuse 40 der Messeinheit 300 ist eine Glasscheibe 42 mit der Grenzfläche 43 durch einen dichten Rahmen 44 gehalten. Zur Vermeidung von optischen Reflexionen beim Durchgang von Messlicht durch die Glasscheibe 42 ist diese leicht schräg gestellt. Eine solche Schrägstellung ist aber nicht bei allen solchen Analysegeräten notwendig oder vorgesehen.

Nur der Übersichtlichkeit halber ist die optische Messeinheit 300 beabstandet von den der Spüleinheit 100 der Fig. 1a gezeigt. Während des Betriebes befindet sich das Gehäuse 40 in der Ausnehmung 32 der Spülgaseinheit 100. Die Glasscheibe 42 trennt den Rohrinnenraum 11 und damit das Messvolumen 200 von den in der Messeinheit 300 vorgesehenen optischen Elementen.

Der Spülring 12 umfasst in seiner Mantelfläche Bohrungen 14, die weiter unten detailliert beschrieben werden und von denen hier die innenseitigen Öffnungen 14' sichtbar sind.

Außerdem sind am Außenumfang des Spülringes 12 Nuten 20, 20', 20" und Durchgänge 22 vorgesehen. An der einen Stirnseite des Spülringes 12, die der Messeinheit 300 zugewandt ist, ist die Wandung des Spülringes 12 größtenteils - mit Ausnahme der Bereiche 17, die axiale Fortsätze bilden, - zurückgesetzt. Auf diese Weise entsteht bei in den Flansch 10 eingeschobenem Spülring 12 ein Ringspalt 15. Die Bohrungen 14 und der Ringspalt 15 stehen über axiale Kanäle 18 und einen ringförmigen Falz 24 insbesondere mit der Nut 20' in Verbindung.

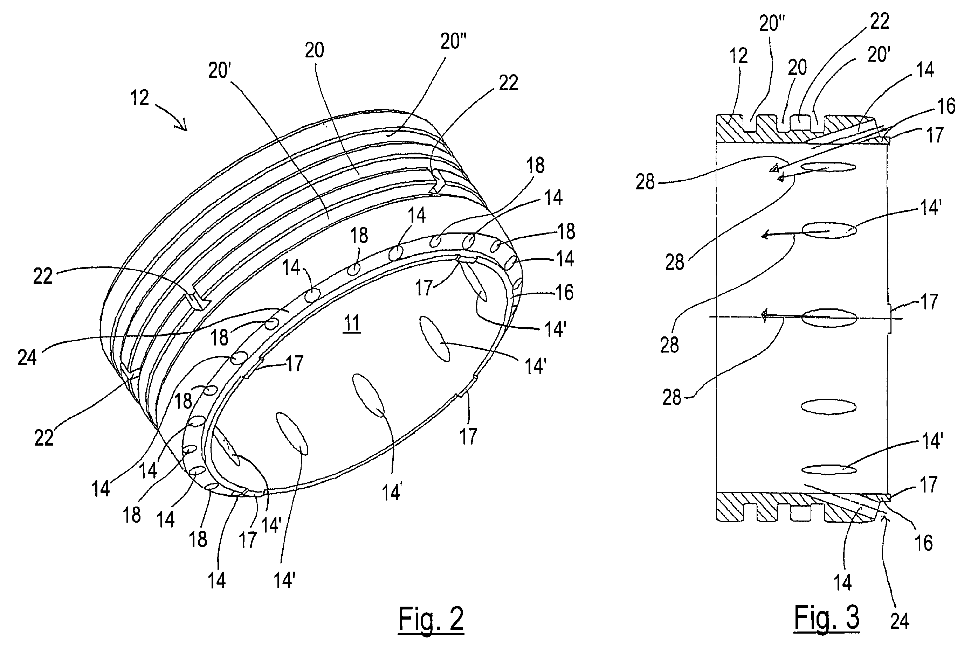

Fig. 2 zeigt den Spülring 12 isoliert in einer schrägen Draufsicht, während Fig. 3 einen Schnitt durch den Spülring zeigt. In der schrägen Draufsicht der Fig. 2 sind insbesondere die ringförmigen Nuten 20, 20', 20" erkennbar, die durch Durchgänge bildende Ausnehmungen 22 miteinander verbunden sind, die rechtwinklig auf die Nuten treffen. Insbesondere sind bei der gezeigten Ausführungsform zwischen den ringförmigen Nuten 20" und 20 zwei gegenüberliegend angeordnete Durchgänge 22 vorgesehen, von denen in der Darstellung der Fig. 2 einer erkennbar ist. Zwischen den ringförmigen Nuten 20 und 20' sind vier Durchgänge 22 vorgesehen, die um den Umfang des Spülrings 12 verteilt angeordnet sind und von denen zwei in der Darstellung der Fig. 2 erkennbar sind. Wie es in Fig. 2 sichtbar ist, sind die Durchgänge 22 zwischen den ringförmigen Nuten 20 und 20' gegenüber den Durchgängen 22 zwischen den ringförmigen Nuten 20" und 20 versetzt angeordnet.

Die Anzahl der ringförmigen Nuten ist nicht auf drei beschränkt. Andere, nicht gezeigte Ausführungsformen weisen zum Beispiel mehr Nuten auf, wobei sich dann die Anzahl der Durchgänge 22 zwischen benachbarten Nuten jeweils verdoppelt (zwischen den ersten zwei ringförmigen Nuten sind zum Beispiel zwei Durchgänge 22 vorgesehen, zwischen der zweiten und der dritten ringförmigen Nut sind vier Durchgänge 22 vorgesehen, zwischen der dritten und der vierten ringförmigen Nut sind acht Durchgänge vorgesehen, etc.).

Bei der gezeigten Ausführungsform sind mit der letzten Nut 20' Kanäle 18 verbunden. Die Kanäle 18 öffnen sich in Richtung des Falzes 24 an der in Fig. 2 sichtbaren Stirnfläche des Spülringes 12. Der Falz 24 steht dementsprechend über die Kanäle 18 mit der letzten Nut 20' in Verbindung. Andererseits stehen mit dem Falz 24 die Bohrungen 14 in Verbindung, die sich ausgehend von dem Falz 24 schräg in Richtung des Rohrinnenraumes 11 erstrecken. Zum Rohrinnenraum 11 hin wird der Falz 24 von einem Ansatz 16 abgeschlossen, der axial sich erstreckende Fortsätze 17 aufweist. Der Falz 24 ist besonders gut in den Schnittzeichnungen der Fig. 1 und 3 zu erkennen.

Wie es in Fig. 2 erkennbar ist, wechseln sich die Kanäle 18 und die Bohrungen 14 in Umfangsrichtung des Spülringes 12 ab. In Fig. 2 sind an der Stirnfläche des Spülringes 12 die Bohrungen 14 größer erkennbar als die Kanäle 18. Die Öffnungen der Bohrungen 14 in Richtung des Rohrinnenraumes 11 sind mit Bezugsziffer 14' bezeichnet.

Anhand der Fig. 2 lässt sich auch darstellen, durch welche Ebene der Schnitt der Fig. 1 gelegt ist. Der seitliche Schnitt der Fig. 1 durch die Spüleinheit 100 ist so gelegt, dass er den Spülring genau durch zwei gegenüberliegende Kanäle 18 schneidet, die den Falz 24 mit der letzten Nut 20' verbinden.

Fig. 3 zeigt den Spülring 12 der Fig. 2 im seitlichen Schnitt. Der Schnitt ist dabei so gelegt, dass er genau durch zwei solche gegenüberliegende Bohrungen 14 geht, die jeweils radial benachbart zu Fortsätzen 17 angeordnet sind. Bei der in Fig. 2 gezeigten Ausführungsform bedeutet dies gleichzeitig, dass der Schnitt durch einen Durchgang 22 geht, der die letzte Nut 20' mit der benachbarten Nut 20 verbindet. Außerdem sind in Fig. 3 die Gasströme 28 eingezeichnet, die durch die jeweiligen Bohrungen 14 in den Rohrinnenraum 11 einfließen, wenn der Spülring 12 in Betrieb ist.

Die gezeigte Ausführungsform kann wie folgt eingesetzt werden.

Die Spüleinheit 100 wird an einer in Fig. 1b gezeigten optischen Messeinheit 300 angeschlossen, die dazu in der Ausnehmung 32 befestigt werden kann, sodass die Glasscheibe 42 den Rohrinnenraum 11 von den optischen Elementen der Messeinheit trennt. In den rohrförmigen Flansch 10 ist der Spülring 12 eingeschoben und mit der Abdeckung 30 gehalten. Die gesamte Einheit 100 wird entweder über die Abdeckung 30 oder direkt über den Flansch 10 mit der Wandung eines Messvolumens 200 verbunden, durch das zum Beispiel Abgas strömt.

In in den Darstellungen der Figuren nicht sichtbarer Weise ist die erste Nut 20" mit einer Spülgaszufuhr verbunden. Dazu ist zum Beispiel auf der in Fig. 1a nicht sichtbaren Seite des rohrförmigen Flansches 10 ein entsprechender Anschluss für eine Gasflasche oder ähnliches vorgesehen. Im Betrieb strömt das Gas in die erste Nut 20" ein und verteilt sich dort ringförmig. Durch Durchgänge 22 kann Gas aus dem ersten Ringspalt 20" in Richtung der nächsten Nut 20 fließen. Durch die Ausrichtung der einzelnen Durchgänge 22 ist gewährleistet, dass das Gas in die Nut 20 senkrecht einfließt und direkt auf die gegenüberliegende Nutwand trifft und sich dort in zwei Teile aufteilt und auf diese Weise ringförmig in die Nut 20 strömt. Von der Nut 20 aus kann das Gas über andere Durchgänge 22 in analoger Weise in die letzte Nut 20' einfließen. An jedem Durchgang 22 wird also der durch diesen Durchgang 22 strömende Gasstrom sehr exakt in zwei Teile geteilt. In der letzten Nut 20' ist dementsprechend eine sehr gute und homogene Gasströmung vorhanden.

Durch die Kanäle 18 kann aus der letzten Nut 20' das Gas in den Falz 24 strömen. Ein Teil des dort einströmenden Spülgases strömt durch die Bohrungen 14 in den Rohrinnenraum 11. Wie in Fig. 3 dargestellterweise ist dieser Gasstrom 28 schräg nach innen in den Rohrinnenraum 11 gerichtet und insofern von der optischen Grenzfläche 43 weg. Ein weiterer Teil des durch die Bohrungen 18 in den Falz 24 einströmenden Gases fließt wie ein Gasvorhang durch den Ringspalt 15, der von dem Ansatz 16 und den Fortsätzen 17 vor der Glasscheibe 42 gebildet wird. Der durch den Ringspalt 15 eintretende Gasvorhang wird durch die Ausrichtung der durch die Bohrungen 14 strömenden Gasströme 28 von der optischen Grenzfläche weggezogen, bildet aber andererseits einen Ausgleich für den durch die Gasströme 28 gebildeten Unterdruck vor der optischen Grenzfläche 43.

Die Erfindung ermöglicht das Einfließen des Spülgases mit geringer Verwirbelung und einem damit einhergehenden verringerten eventuellen Rücktransport von Gas/Teilchen gegen die Strömungsrichtung 28 zur optischen Grenzfläche 43 hin. Ein Unterdruck an der optischen Grenzfläche 43 wird vermieden, da der Hauptgasstrom durch die einzelnen Gasströme 28 von der optischen Grenzfläche 43 weggeleitet wird. Trotzdem ist die Spülung gegebenenfalls unter Einsatz eines oder mehrerer zusätzlicher Gasvorhänge durch den Ringspalt 15 oder mehrere Ringspalte effektiv möglich. Insgesamt kann eine solche Spülung mit weniger Spülgas auskommen und die Spülung ist in weitem Bereich nahezu unabhängig vom Volumenstrom. Eine eventuell vorgesehene Neigung der optischen Grenzfläche 43 im Rahmen 44 zur Vermeidung möglicher Reflexionen eines optischen Messstrahles ist weniger kritisch.

### Bezugszeichenliste

- 10: Flansch
- 11: Rohrvolumen
- 12: Spülring
- 14: Bohrung
- 14': Öffnung der Bohrung
- 15: Schlitzdüse
- 16: Ansatz
- 17: Fortsatz
- 18: Kanal
- 20, 20', 20": Nut
- 22: Durchgang
- 24: Falz
- 28: Gasstrom durch eine Bohrung
- 30: Abdeckung
- 31: Schraublöcher
- 32: Ausnehmung
- 40: Gehäuse
- 42: Glasfenster
- 43: optische Grenzfläche
- 44: Rahmen
- 50: Sendelicht
- 52: Empfangslicht
- 100: Spüleinheit
- 200: Messvolumen
- 300: optische Messeinheit

## Patentansprüche

1. Vorrichtung zur Gasspülung einer optischen Grenzfläche, mit einer zumindest teilweise rohrförmigen Spülgaszuführungseinheit (100), die in ihrer Mantelfläche mehrere Bohrungen (14) zur Gaszuleitung in den Rohrinnenraum (11) aufweist und an deren Stirnseite die zu spülende optische Grenzfläche (43) angeordnet ist oder anzuordnen ist, wobei die Bohrungen (14) derart ausgerichtet sind, dass sie den jeweiligen Gasstrom (28) von der zu spülenden optischen Grenzfläche (43) wegleiten,
**gekennzeichnet durch**
wenigstens einen benachbart zu der Stirnseite, die der optischen Grenzfläche (43) zugewandt ist, und zwischen der Stirnseite und den Bohrungen (14) angeordneten Ringspalt (15) in der Mantelfläche der rohrförmigen Spülgaszufuhreinheit zur zusätzlichen Zuführung von Spülgas.

2. Vorrichtung zur Gasspülung einer optischen Grenzfläche nach Anspruch 1, **dadurch gekennzeichnet, dass** die Bohrungen (14) derart ausgestaltet sind, dass durch sie jeweils ein Gasstrom (28) von im Wesentlichen gleicher Größe fließt.

3. Vorrichtung zur Gasspülung einer optischen Grenzfläche nach Anspruch 2, **dadurch gekennzeichnet, dass** die Durchmesser der Bohrungen (14) derart unterschiedlich gewählt sind, dass unabhängig von der Geometrie und/oder Länge einer Gasflussstrecke zwischen einer Gaszufuhr und der jeweiligen Bohrung (14) durch alle Bohrungen ein Gasstrom (28) von im Wesentlichen gleicher Größe fließt.

4. Vorrichtung zur Gasspülung einer optischen Grenzfläche nach Anspruch 2, **dadurch gekennzeichnet, dass** zur Erzeugung eines Gasstroms von im Wesentlichen gleicher Größe jede Bohrung mit einer eigenen Gaszufuhr verbunden ist.

5. Vorrichtung zur Gasspülung einer optischen Grenzfläche nach einem der Ansprüche 1 oder 2, **gekennzeichnet durch** wenigstens eine Gaseinströmungseinrichtung, deren eines Ende mit einer Gaszufuhr verbunden werden kann und die ausgehend von diesem Ende baumartig in mehrere Kanäle verzweigt, die mit den Bohrungen (14) verbunden sind.

6. Vorrichtung zur Gasspülung einer optischen Grenzfläche nach Anspruch 5, **dadurch gekennzeichnet, dass** eine Verzweigung eines Kanals einen Ringkanal (20, 20', 20") umfasst, der derart mit einem zuführenden Kanal (22) in Verbindung steht, dass ein durch den zuführenden Kanal einströmender Gasstrom senkrecht auf eine Wand des Ringkanals (20, 20') auftrifft und darin nach zwei Seiten geometrisch identisch abgeleitet wird.

7. Vorrichtung zur Gasspülung einer optischen Grenzfläche nach einem der Ansprüche 1 bis 6, **dadurch gekennzeichnet, dass** die Bohrungen in Umfangsrichtung der Spülgaszuführeinheit schräg ausgerichtet sind, um dem einströmenden Gas einen Drall in Umfangsrichtung zu geben.

8. Vorrichtung zur Gasspülung einer optischen Grenzfläche nach einem der Ansprüche 1 bis 7, **dadurch gekennzeichnet, dass** die rohrförmige Spülgaszufuhreinheit einen rohrförmigen Flansch (10) umfasst.

9. Vorrichtung zur Gasspülung einer optischen Grenzfläche nach Anspruch 8, **dadurch gekennzeichnet, dass** in dem rohrförmigen Flansch (10) ein Spülring (12) vorgesehen ist, in dem die Gaszuführungen in den Rohrinnenraum (11) vorgesehen sind, und dessen Außendimensionen an die Innendimensionen des Flansches (10) angepasst sind.

10. Vorrichtung zur Gasspülung einer optischen Grenzfläche nach Anspruch 9, insoweit er direkt oder indirekt von Anspruch 6 abhängig ist, **dadurch gekennzeichnet, dass** sich am Außenumfang des Spülrings (12) ringförmige Nuten (20) befinden, die bei in den Flansch (10) eingesetzten Spülring (12) Ringkanäle bilden.

11. Optische Analysevorrichtung mit
- einem von einer Wandung umgebenen Messvolumen zur Beobachtung eines darin befindlichen zu analysierenden Mediums oder einer Einrichtung zur Verbindung mit einem solchen Messvolumen (200),
- einer Vorrichtung zur Gasspülung nach einem der Ansprüche 1 bis 10, wobei die Spülgaszuführungseinheit (100) durch eine Öffnung in der Wandung mit dem Messvolumen (200) verbunden oder mit ihm verbindbar ist, und
- einer Messeinheit (300), die mit der Spülgaszuführungseinheit (100) verbunden oder mit dieser verbindbar ist und eine Messeinrichtung zur optischen Analyse des Mediums in dem Messvolumen (200) durch die Spülgaszuführeinheit (100) hindurch aufweist, wobei die Messeinrichtung (300) von der Spülgaszuführungseinheit (100) durch ein Sichtfenster (42) getrennt ist, das eine optische Grenzfläche (43) aufweist.

12. Optische Analysevorrichtung nach Anspruch 11, **dadurch gekennzeichnet, dass** die Spülgaszuführungseinheit (100) einen rohrförmigen Flansch (10) umfasst, der als separates Bauteil ausgestaltet ist.

## Claims

1. An apparatus for the gas flushing of an optical boundary surface comprising an at least partly tubular flushing gas supply unit (100) which has a plurality of bores (14) in its jacket surface for the gas feed into the inner tubular space (11) and at whose end face the optical boundary surface (43) to be flushed is or is to be arranged, wherein the bores (14) are aligned such that they lead the respective gas flow (28) away from the optical boundary surface (43) to be flushed,
**characterized by**
at least one annular gap (15) in the jacket surface of the tubular flushing gas supply unit for the additional supply of flushing gas, said annular gap being adjacent to the end face, facing the optical boundary surface (43) and being arranged between the end face and the bores (14).

2. An apparatus for the gas flushing of an optical boundary surface in accordance with claim 1, **characterized in that** the bores (14) are configured such that a respective gas flow (28) of substantially the same magnitude flows through them.

3. An apparatus for the gas flushing of an optical boundary surface in accordance with claim 2, **characterized in that** the diameters of the bores (14) are selected so differently that a gas flow (28) of substantially the same magnitude flows through all the bores independently of the geometry and/or length of a gas flow path between a gas supply and the respective bore (14).

4. An apparatus for the gas flushing of an optical boundary surface in accordance with claim 2, **characterized in that** each bore is connected to its own gas supply for generating a gas flow of substantially the same magnitude.

5. An apparatus for the gas flushing of an optical boundary surface in accordance with one of the claims 1 or 2, **characterized by** at least one gas inflow device whose one end can be connected to a gas supply and which branches, starting from this end, in the manner of a tree into a plurality of passages which are connected to the bores (14).

6. An apparatus for the gas flushing of an optical boundary surface in accordance with claim 5, **characterized in that** a branching of a passage comprises a ring passage (20, 20', 20") which is in communication with a supplying passage (22) such that a gas flow flowing in through the supplying passage impacts a wall of the ring passage (20, 20') in a perpendicular manner and is led off to two sides geometrically identically therein.

7. An apparatus for the gas flushing of an optical boundary surface in accordance with any one of the claims 1 to 6, **characterized in that** the bores are aligned obliquely in the peripheral direction of the flushing gas supply unit to impart a swirl in the peripheral direction to the inflowing gas.

8. An apparatus for the gas flushing of an optical boundary surface in accordance with any one of the claims 1 to 7, **characterized in that** the tubular flushing gas supply unit comprises a tubular flange (10).

9. An apparatus for the gas flushing of an optical boundary surface in accordance with claim 8, **characterized in that** a flushing ring (12) is provided in the tubular flange (10), with the gas supplies into the inner tubular space (11) being provided in said flushing ring and with the outer dimensions of said flushing ring being matched to the inner dimensions of the flange (10).

10. An apparatus for the gas flushing of an optical boundary surface in accordance with claim 9, to the extent it is directly or indirectly dependent on claim 6, **characterized in that** annular grooves (20) are located at the outer periphery of the flushing ring (12) and form ring passages with the flushing ring (12) inserted into the flange (10).

11. An optical analysis apparatus comprising
- a measurement volume surrounded by a wall for observing a medium to be analyzed located therein or a device for connecting to such a measurement volume (200);
- an apparatus for gas flushing in accordance with any one of the claims 1 to 10, with the flushing gas supply unit (100) being connected or connectable to the measurement volume (200) through an opening in the wall; and
- a measurement unit (300) which is connected or connectable to the flushing gas supply unit (100) and has a measurement device for the optical analysis of the medium in the measurement volume (200) through the flushing gas supply unit (100), with the measurement device (300) being separated from the flushing gas supply unit (100) by an inspection window (42) which has an optical boundary surface (43).

12. An optical analysis apparatus in accordance with claim 11, **characterized in that** the flushing gas supply unit (100) comprises a tubular flange (10) which is designed as a separate component.

## Revendications

1. Dispositif de rinçage au gaz d'une surface limite optique, comportant une unité d'alimentation en gaz de rinçage (100) au moins partiellement tubulaire qui, dans sa surface enveloppe, présente plusieurs perçages (14) pour l'amenée de gaz dans l'espace intérieur (11) du tube et à la face frontale de laquelle est agencée ou doit être agencée la surface limite optique (43) à rincer, les perçages (14) étant orientés de manière à écarter le courant de gaz respectif (28) de la surface limite optique (43) à rincer, **caractérisé par** au moins une fente annulaire (15) agencée au voisinage de la face frontale tournée vers la surface limite optique (43) et entre la face frontale et les perçages (14), dans la surface enveloppe de l'unité tubulaire d'alimentation en gaz de rinçage, en vue d'une amenée supplémentaire de gaz de rinçage.

2. Dispositif de rinçage au gaz d'une surface limite optique selon la revendication 1, **caractérisé en ce que** les perçages (14) sont réalisés de manière à être traversés par un courant de gaz respectif (28) de taille sensiblement égale.

3. Dispositif de rinçage au gaz d'une surface limite optique selon la revendication 2, **caractérisé en ce que** les diamètres des perçages (14) sont choisis différents de telle sorte qu'un courant de gaz (28) de taille sensiblement égale s'écoule à travers tous les perçages, indépendamment de la géométrie et/ou de la longueur d'un trajet d'écoulement de gaz entre une alimentation de gaz et le perçage respectif (14).

4. Dispositif de rinçage au gaz d'une surface limite optique selon la revendication 2, **caractérisé en ce qu'**en vue de générer un courant de gaz de taille sensiblement égale, chaque perçage est relié à une propre alimentation en gaz.

5. Dispositif de rinçage au gaz d'une surface limite optique selon l'une des revendications 1 ou 2, **caractérisé par** au moins un moyen d'entrée de gaz dont une extrémité peut être reliée à une alimentation en gaz et qui, à partir de cette extrémité, est ramifiée de façon arborescente en plusieurs canaux reliés aux perçages (14).

6. Dispositif de rinçage au gaz d'une surface limite optique selon la revendication 5, **caractérisé en ce qu'**une ramification d'un canal comprend un canal annulaire (20, 20', 20") qui est en communication avec un canal d'alimentation (22) de telle sorte qu'un courant de gaz rentrant par le canal d'alimentation rejoint perpendiculairement une paroi du canal annulaire (20, 20') et y est évacué de façon géométriquement identique vers deux côtés.

7. Dispositif de rinçage au gaz d'une surface limite optique selon l'une des revendications 1 à 6, **caractérisé en ce que** les perçages sont orientés en oblique en direction périphérique de l'unité d'alimentation en gaz de rinçage, afin de conférer au gaz rentrant un tourbillonnement en direction périphérique.

8. Dispositif de rinçage au gaz d'une surface limite optique selon l'une des revendications 1 à 7, **caractérisé en ce que** l'unité tubulaire d'alimentation en gaz de rinçage comprend une bride tubulaire (10).

9. Dispositif de rinçage au gaz d'une surface limite optique selon la revendication 8, **caractérisé en ce que** dans la bride tubulaire (10) est prévu un anneau de rinçage (12) dans lequel sont prévues les alimentations en gaz vers l'espace intérieur (11) du tube, et dont les dimensions extérieures sont adaptées aux dimensions intérieures de la bride (10).

10. Dispositif de rinçage au gaz d'une surface limite optique selon la revendication 9 prisé directement ou indirectement en dépendance de la revendication 6, **caractérisé en ce qu'**à la périphérie extérieure de l'anneau de rinçage (12) sont prévues des gorges annulaires (20) qui, l'anneau de rinçage (12) étant mis en place dans la bride (10), forment des canaux annulaires.

11. Dispositif d'analyse optique comportant
- un volume de mesure entouré par une paroi et destiné à observer un fluide à analyser situé dans celui-ci ou un moyen destiné à la liaison avec un tel volume de mesure (200),
- un dispositif de rinçage au gaz selon l'une des revendications 1 à 10, l'unité d'alimentation en gaz de rinçage (100) étant reliée ou susceptible d'être reliée au volume de mesure (200) à travers un orifice dans la paroi, et
- une unité de mesure (300) qui est reliée ou susceptible d'être reliée à l'unité d'alimentation en gaz de rinçage (100) et qui comprend un moyen de mesure destiné à l'analyse optique du fluide dans le volume de mesure (200) à travers l'unité d'alimentation en gaz de rinçage (100), le moyen de mesure (300) étant séparé de l'unité d'alimentation en gaz de rinçage (100) par une fenêtre d'observation (42) qui présente une surface limite optique (43).

12. Dispositif d'analyse optique selon la revendication 11, **caractérisé en ce que** l'unité d'alimentation en gaz de rinçage (100) comprend une bride tubulaire (10) qui est réalisée sous forme de composant séparé.
